# EUROPEAN PATENT SPECIFICATION

(11) **EP 3 257 137 B1**
(45) Date of publication and mention of the grant of the patent: **04.12.2019**
(21) Application number: 16705827.0
(22) Date of filing: 08.02.2016
(51) Int. Cl.: H02J 50/10

(54) **WIRELESS POWER TRANSMISSION DEVICE**
VORRICHTUNG ZUR DRAHTLOSEN STROMÜBERTRAGUNG
DISPOSITIF DE TRANSMISSION D'ÉNERGIE SANS FIL

(30) Priority: 09.02.2015 CN 201520093258 U
(43) Date of publication of application: 20.12.2017
(73) Proprietor: Tyco Electronics (Shanghai) Co. Ltd., Shanghai 200131 (CN)
(72) Inventor: ZOU, Li, Shanghai (CN); WANG, Shaoyong, Shanghai (CN); FAN, Mingjie, Shanghai (CN)
(74) Representative: Grünecker Patent- und Rechtsanwälte PartG mbB
(86) International application number: PCT/IB2016/050656
(87) International publication number: WO 2016/128882

(56) References cited:
- EP-A1- 2 149 960
- EP-A1- 2 333 932
- KR-A- 20110 135 149
- KR-A- 20110 135 151
- US-A1- 2013 051 083

## Description

### Technical Field

Embodiments of the disclosure relate to a wireless power transmission system to wirelessly transmit electricity through electromagnetic coupling and an apparatus including the same.

### Background Art

A wireless power transmission system to wirelessly transmit electricity through electromagnetic coupling comprises a power transmitter and a power receiver. The power transmitter is adapted to convert an input DC current into an electromagnetic energy, and the power receiver is adapted to receive the electromagnetic energy output from the power transmitter and convert the electromagnetic energy into a predetermined voltage to be output.

In the prior art, the wireless power transmission system is generally designed in accordance with a Qi Standard which is an interconnection standard, adapted for a wireless inductive power transmission with short-distance and low-power, established by Wireless Power Consortium and is mainly intended to provide convenient and universal wireless charging for mobile phones and other portable electronic devices.

However, in the wireless power transmission device having the aforementioned Qi standard, circuit functions thereof are complex, and specialized custom chips are required to achieve circuit control. Further, control circuit modules are large in size and circuit designs are highly cost. Therefore, the Qi standard is currently only applied to expensive electronic devices such as wireless charging applications for mobile phones.

In addition, in the prior art, for a wireless power supply device based coil inductive and having a H-bridge chip design, integration level of the circuit design is low, resulting in corresponding external logic control chips. Further, the circuit control is complex, and it is necessary to consider dead-zone control of an H-bridge switch. Moreover, the control circuit modules are large in size and the circuit designs are high in cost, which renders that the wireless power supply device cannot be widely used in household appliances and industrial applications.

US 2013/051083 A1 discloses a magnetic coupling and contactless power transmission apparatus. In one embodiment, an apparatus can include: a sweep generator to generate a switching pulse signal for operation of bottom switches of a primary-side full-bridge switching circuit; a primary-side switching current zero-crossing detector to generate a primary-side current zero-crossing pulse signal when a primary-side switching current crosses zero; a primary-side PWM signal generator to generate a primary-side PWM signal per an input current to control a shut-off operation of top switches of the primary-side full-bridge switching circuit; in a first operation condition, a frequency of the switching pulse signal is higher than the primary-side current zero-crossing pulse signal, and the switching pulse signal controls a shut-off operation of the bottom switches of the primary-side full-bridge switching circuit.

KR 2011 0135149 A discloses a semiconductor package having functions of wireless signal transmission and wireless power driving and heat dissipation to improve the radiation effect by supplying power to a thermoelectric device module in wireless and removing a metal line. In a semiconductor package having functions of wireless signal transmission and wireless power driving and heat dissipation, a base part comprises a first side a second side. A thermoelectric part comprises an electricity receiver and a thermoelectric element. A wireless power supply unit provides power to the base part and a semiconductor chip mounted in a mounting region. The wireless power supply unit receives power signal from outside in wireless. The wireless power supply unit comprises a power transmitter and an electricity receiver.

KR 2011 0135151 A discloses another semiconductor package having functions of wireless signal transmission and wireless power driving to reduce costs for a semiconductor package without wire or ball. In a semiconductor package having functions of wireless signal transmission and wireless power driving, a substrate comprises a base part, a wireless power supply unit, and a substrate wireless signal part. The base part comprises a first side and a second side. A wireless power supply unit supplies power to the base part and a semiconductor chip. The wireless power supply unit receives power through a non-radiative method using magnetic field resonance. The wireless power supply unit includes a power transmitter and a power receiver.

EP 2 149 960 A1 discloses an electrical appliance, comprising a casing provided with a power supply adapted for supplying, via an electric connection, the electric power to one or more electrical devices of the electrical appliance and comprising at least one inductive element generating a variable leakage magnetic field while the power supply is operating. The electrical appliance comprises at least one first electric coil arranged to electromagnetically interact with the variable leakage magnetic field, so as to induce in the first electric coil an electric current adapted to feed at least a further electrical device.

EP 2 333 932 A1 discloses a contactless power reception circuit that includes a power reception part, a voltage rectifying part, a voltage transforming part and a load modulation part. The voltage transforming part includes a smoothing capacitor, a DC-DC converter and a backflow prevention device. The power reception part is couplable with an electromagnetic field adjacent to the contactless power reception circuit. The rectifying part rectifies a voltage output from the power reception part, the voltage transforming part transforms rectified voltage from the rectifying part, and the load modulation circuit conducts a load modulation while signals are transmitted. The smoothing capacitor smoothes a voltage input to the voltage transforming part, the DC-DC converter transforms voltage smoothed by the smoothing capacitor, and the backflow prevention device prevents backflow of charge from the smoothing capacitor while the signals are transmitted to a contactless power transmission circuit.

### Disclosure of Invention

It would be advantageous to provide a wireless power supply system to reduce the size of the control modules with lower cost, so that the wireless power supply device may be applied to a conventional closed-loop system to achieve an internal power supply and signal transmission from one component to another component of an apparatus by mean of a non-contact.

According to an aspect of the disclosure, there is provided a wireless power transmission system comprising a power transmitter adapted to convert an input DC power into an electromagnetic energy and a power receiver electromagnetically coupled with the power transmitter and adapted to receive an electromagnetic energy output from the power transmitter. The power transmitter includes a wave generating circuit adapted to generate a square wave control signal having a predetermined frequency and duty cycle according to the input DC power input, a switching control drive circuit electrically connected with the wave generating circuit for converting the input DC power into an alternating electrical signal according to the received square wave control signal, and a first coil coupling circuit electrically connected with the switching control drive circuit for converting the alternating electrical signal output from the switching control drive circuit into the electromagnetic energy and output the electromagnetic energy.

According to an exemplary embodiment of the disclosure, the switching control drive circuit includes a logic control circuit electrically connected with the wave generating circuit and a MOSFET switching circuit electrically connected with the logic control circuit.

According to anther exemplary embodiment of the disclosure, the logic control circuit and the MOSFET switching circuit are integrated on one chip.

According to yet another exemplary embodiment of the disclosure, the wave generating circuit is adapted to generate a PWM signal having a predetermined frequency and a predetermined duty cycle, for example, to generate a PWM signal having the predetermined frequency of 50KHz-200KHz and the predetermined duty cycle of 30%-80%.

According to further another exemplary embodiment of the disclosure, the first coil coupling circuit includes a first compensation circuit electrically connected with the switching control drive circuit and a first coil electrically connected with the first compensation circuit.

According to another exemplary embodiment of the disclosure, the power receiver includes a second coil coupling circuit electromagnetically coupled with the first coil coupling circuit and adapted to receive the electromagnetic energy output from the first coil coupling circuit and convert the received electromagnetic energy into the alternating electrical signal, rectifying and filtering circuits electrically connected with the second coil coupling circuit and adapted to convert the alternating electrical signal output from the second coil coupling circuit into a DC electrical signal, and a DC-DC converting circuit electrically connected with the rectifying and filtering circuits and adapted to convert the DC electrical signal output from the rectifying and filtering circuits into a predetermined voltage output (Vout) or a predetermined current output.

According to yet another exemplary embodiment of the disclosure, the rectifying and filtering circuits half-wave rectify the alternating electrical signal output from the second coil coupling circuit through a single diode.

According to further another exemplary embodiment of the disclosure, the second coil coupling circuit includes a second compensation circuit electrically connected with the rectifying circuits and a second coil electrically connected with the second compensation circuit.

In the wireless power transmission system
according to various embodiment of the disclosure, a universal switching control drive chip is employed. Thus, it is possible to greatly reduce the cost and size of the control module. In addition, in some embodiments of the disclosure, the switching control drive circuit is realized by one integrated control drive chip. Through integrating the logic control circuit and the MOSFET switching circuit on one chip, it is possible to solve the problem of the dead zone of the MOSFET switching circuit, which improves the integration level of the circuit and reduces the over size of the modules.

Other objects and advantages of the disclosure will be apparent by the following description with reference to the accompanying drawings and will be helpful for a comprehensive understanding to the disclosure.

The present invention is set out in the appended set of claims. The embodiments, aspects and/or examples of the present disclosure which are not covered by the appended claims are considered as not being part of the present invention.

### Brief Description of Drawings

Figure 1 shows a block diagram of a wireless power transmission device according to an example of the disclosure;
Figure 2 shows a block diagram of a power transmitter of the wireless power transmission device of Figure 1; and
Figure 3 shows a block diagram of a power receiver of the wireless power transmission device of Figure 1.

### Best Mode for Carrying Out the Invention

Exemplary embodiments of the disclosure will be described hereinafter in detail with reference to the attached drawings, wherein the same or similar reference numerals refer to the same or similar components. The description to the embodiments of the disclosure hereinafter with reference to the attached drawings is intended to explain the inventive idea of the disclosure and should not be construed as being limited to the disclosure.

In addition, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the disclosure, there is provided a wireless power transmission system comprising a power transmitter adapted to convert an input DC power input into an electromagnetic energy and a power receiver electromagnetically coupled with the power transmitter and adapted to receive an electromagnetic energy output from the power transmitter. The power transmitter includes a wave generating circuit adapted to generate a square wave control signal having a predetermined frequency and duty cycle according to the input DC power, a switching control drive circuit electrically connected with the wave generating circuit and configured to convert the input DC power into an alternating electrical signal according to the received square wave control signal, and a first coil coupling circuit electrically connected with the switching control drive circuit and configured to convert the alternating electrical signal output from the switching control drive circuit into the electromagnetic energy and output this electromagnetic energy.

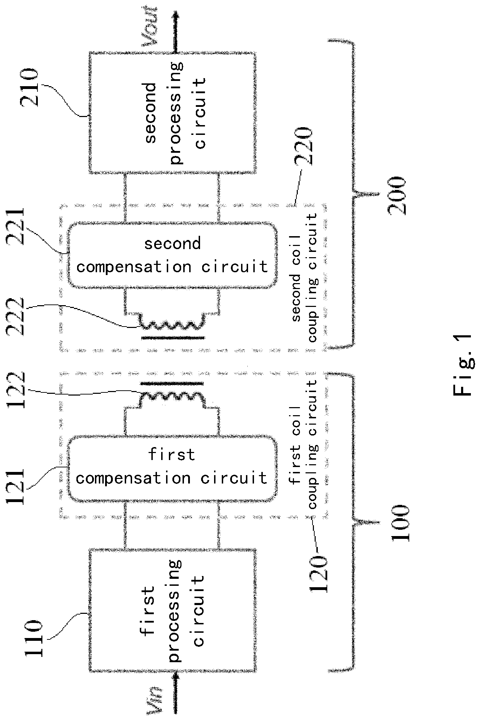

Figure 1 shows a block diagram of a wireless power transmission system according to an example of the disclosure.

In an exemplary embodiment of the disclosure, a wireless power transmission device is disclosed. As shown in Figure 1, the wireless power transmission device mainly comprises a power transmitter 100 and a power receiver 200. The power transmitter 100 is adapted to convert an input DC power Vin into an electromagnetic energy. The power receiver 200 is electromagnetically coupled with the power transmitter 100 and adapted to receive the electromagnetic energy output from the power transmitter 100.

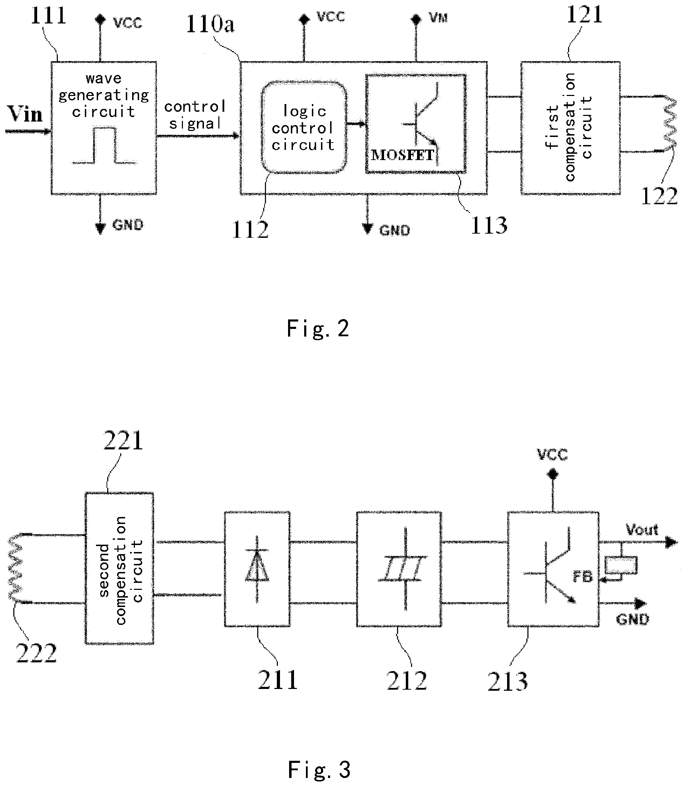

Figure 2 shows a block diagram of the power transmitter 100 of the wireless power transmission device of Figure 1.

As shown in Figures 1 and 2, in the illustrated embodiment, the power transmitter 100 mainly includes a first processing circuit 110 and a first coil coupling circuit 120. The first processing circuit 110 includes a wave generating circuit 111 and a switching control drive circuit 110a.

In the embodiment shown in Figure 2, the wave generating circuit 111 is adapted to generate a square wave control signal having a predetermined frequency according to the DC power input Vin. For example, the wave generating circuit can generate a PWM signal having a predetermined frequency and a predetermined duty cycle, for example, may generate the PWM signal having the frequency of 50KHz-200KHz and the duty cycle of 30% to 80%. A universal control chip may be used in the wave generating circuit to cooperate with external devices such as a resistor and a capacitor so as to obtain the control signal having the predetermined frequency and duty cycle.

Continuing to refer to Figures 1 and 2, the switching control drive circuit 110a is electrically connected with the wave generating circuit 111 for converting the input DC power Vin into an alternating electrical signal according to the received square wave control signal. The first coil coupling circuit 120 is electrically connected with the switching control drive circuit 110a for converting the alternating electrical signal output from the switching control drive circuit 110a into the electromagnetic energy and output the electromagnetic energy.

In the embodiment illustrated in Figure 2, the switching control drive circuit 110a includes a logic control circuit 112 and a MOSFET switching circuit 113. The logic control circuit 112 is electrically connected with the wave generating circuit 111, and the MOSFET switching circuit 113 is electrically connected with the logic control circuit 112.

In an exemplary embodiment of the disclosure, the logic control circuit 112 and the MOSFET switching circuit 113 are integrated on one single control drive chip, which not only can reduce size and cost of the control module and can also solve the problem of a dead zone of the MOSFET switching circuit.

Please referring to Figure 2, in the illustrated embodiment, the first coil coupling circuit 120 includes a first compensation circuit 121 and a first coil 122. The first compensation circuit 121 is electrically connected with the switching control drive circuit 110a, and the first coil 122 is electrically connected with the first compensation circuit 121.

Figure 3 shows a block diagram of the power receiver 200 of the wireless power transmission device of Figure 1.

As shown in Figures 1, 2 and 3, in an exemplary embodiment of the disclosure, the power receiver 200 mainly includes a second coil coupling circuit 220, rectifying and filtering circuits 211, 212 and a DC-DC converting circuit 213.

Please referring to Figures 1, 2 and 3, in the illustrated embodiment, the second coil coupling circuit 220 is electromagnetically coupled with the first coil coupling circuit 120 and is adapted to receive the electromagnetic energy output from the first coil coupling circuit 120 and convert the received electromagnetic energy into the alternating electrical signal. The rectifying and filtering circuits 211, 212 are electrically connected with the second coil coupling circuit 220 and adapted to convert the alternating electrical signal output from the second coil coupling circuit 220 into a DC electrical signal. The DC-DC converting circuit 213 is electrically connected with the rectifying and filtering circuits 211, 212 and adapted to convert the DC electrical signal output from the rectifying and filtering circuits 211, 212 into a predetermined voltage output Vout (constant voltage control) or a predetermined current output (constant current control).

In an exemplary embodiment of the disclosure, the rectifying and filtering circuits 211, 212 is configured to half-wave rectify the alternating electrical signal output from the second coil coupling circuit 220 through a single diode to obtain the DC electrical signal to be output. It is possible to reduce power consumption of the power receiver by means of the half-wave rectification, thereby improving the efficiency of the overall system.

As shown in Figures 1, 2 and 3, in the illustrated embodiment, the second coil coupling circuit 220 includes a second compensation circuit 221 and a second coil 222. The second coil 222 is electromagnetically coupled with the first coil 112 and electrically connected with the second compensation circuit 221. The second compensation circuit 221 is electrically connected with the rectifying circuits 211, 212.

In an exemplary embodiment of the disclosure, the DC-DC converting circuit 213 includes a DC-DC converting chip and a corresponding peripheral circuit. The rectified DC electrical signal may be converted into the predetermined voltage output Vout or the set current output by adjusting ratios of resistors of the peripheral circuit.

The wireless transmission device according to an exemplary embodiment of the disclosure may be applied to conventional closed-loop system to achieve the internal power supply and signal transmission from one component to another component of an apparatus in the manner of non-contact. For example, in an application of a refrigerator structure, this wireless power supply device is installed between a body and door of the refrigerator. Through installing the power transmitter on the body of the refrigerator and installing the power receiver on the door of the refrigerator, it is possible to realize a non-contact connection of the power and signals between a main control board of the body and a control panel on the door of the refrigerator. In another embodiment, through installing the power transmitter of this wireless power transmission on the body of the refrigerator and installing the power receiver of this wireless power transmission on shelves or drawers of the refrigerator, it is possible to realize the non-contact power supply and signal transmission between the body and the shelves or drawers of the refrigerator. The same usage may also apply to other products, such as washing machines, rice cookers and other equipments.

It would be appreciated by those skilled in the art embodiments as described and shown above are exemplary and various changes or modifications may be made thereto. Structures described in various embodiments may be combined in any forms without conflicting with each other in structure or concept.

Although embodiments of the disclosure have been described in detail with reference to the accompanying drawings, the embodiments disclosed in the accompanying drawings is intended to be illustrative, rather than being construed as a limitation to the disclosure.

## Claims

1. A wireless power transmission system comprising:
a power transmitter (100) adapted to convert an input DC power (Vin) into an electromagnetic energy; and
a power receiver (200) electromagnetically coupled with the power transmitter (100) and
adapted to receive an electromagnetic energy output from the power transmitter (100),
wherein the power transmitter (100) includes:
a wave generating circuit (111) adapted to generate a square wave control signal having a predetermined frequency and duty cycle according to the input DC power (Vin), wherein the wave generating circuit (111) is configured to generate a PWM signal having a predetermined frequency and a predetermined duty cycle;
a switching control drive circuit (110a) configured to convert the input DC power (Vin) into an alternating electrical signal according to the received square wave control signal; and
a first coil coupling circuit (120) configured to convert the alternating electrical signal output from the switching control drive circuit (110a) into the electromagnetic energy and output the electromagnetic energy;
and wherein the power receiver (200) includes:
a second coil coupling circuit (220) electromagnetically coupled with the first coil coupling circuit (120) and adapted to receive the electromagnetic energy output from the first coil coupling circuit (120) and convert the received electromagnetic energy into the alternating electrical signal,
rectifying and filtering circuits (211, 212) configured to convert the alternating electrical signal output from the second coil coupling circuit (220) into a DC electrical signal; and
a DC-DC converting circuit (213) configured to convert the DC electrical signal output from the rectifying and filtering circuits (211, 212) into a predetermined voltage output (Vout) or a predetermined current output;
wherein said rectifying circuit (211) is formed by a single diode.

2. The wireless power transmission system according to claim 1, wherein the switching control drive circuit (110a) includes:
a logic control circuit (112) electrically connected with the wave generating circuit (111); and
a MOSFET switching circuit (113) electrically connected with the logic control circuit (112).

3. The wireless power transmission system according to claim 2, wherein the logic control circuit (112) and the MOSFET switching circuit (113) are integrated on one chip.

4. The wireless power transmission system according to claim 3, wherein the first coil coupling circuit (120) includes:
a first compensation circuit (121) electrically connected with the switching control drive circuit (110a); and
a first coil (122) electrically connected with the first compensation circuit (121).

5. The wireless power transmission system according to one of the preceding claims, wherein the second coil coupling circuit (220) includes:
a second compensation circuit (221) electrically connected with the rectifying circuits (211, 212); and
a second coil (222) electrically connected with the second compensation circuit (221).

6. An apparatus comprising the wireless power transmission system according to one of the preceding claims, wherein the power transmitter (100) is installed on a first component of the apparatus, and the power receiver (200) is installed on a second component of the apparatus.

## Patentansprüche

1. System für drahtlose Energieübertragung, das umfasst:
eine Energie-Sendeeinrichtung (100), die zum Umwandeln einer eingegebenen Gleichstrom-Energie (Vin) in eine elektromagnetische Energie eingerichtet ist; sowie eine Energie-Empfangseinrichtung (200), die elektromagnetisch mit der Energie-Sendeeinrichtung (100) gekoppelt und zum Empfangen einer von der Energie-Sendeeinrichtung (100) ausgegebenen elektromagnetischen Energie eingerichtet ist,
wobei die Energie-Sendeeinrichtung (100) enthält:
eine Wellen-Erzeugungsschaltung (111), die so eingerichtet ist, dass sie ein Rechteckwellen-Steuersignal mit einer vorgegebenen Frequenz und einem vorgegebenen Tastverhältnis gemäß der eingegebenen Gleichstrom-Energie (Vin) erzeugt, wobei die Wellen-Erzeugungsschaltung (111) so ausgeführt ist, dass sie ein PWM-Signal mit einer vorgegebenen Frequenz und einem vorgegebenen Tastverhältnis erzeugt;
eine Schaltregelungs-Ansteuerschaltung (110a), die so ausgeführt ist, dass sie die eingegebene Gleichstrom-Energie (Vin) entsprechend dem empfangenen Rechteckwellen-Steuersignal in ein wechselndes elektrisches Signal umwandelt; sowie eine erste Spulen-Kopplungsschaltung (120), die so ausgeführt ist, dass sie das von der Schaltregelungs-Ansteuerschaltung (110a) ausgegebene wechselnde elektrische Signal in die elektromagnetische Energie umwandelt und die elektromagnetische Energie ausgibt;
und wobei die Energie-Empfangseinrichtung (200) enthält:
eine zweite Spulen-Kopplungsschaltung (220), die elektromagnetisch mit der ersten Spulen-Kopplungsschaltung (120) gekoppelt und so eingerichtet ist, dass sie die von der ersten Spulen-Kopplungsschaltung (120) ausgegebene elektromagnetische Energie empfängt und die empfangene elektromagnetische Energie in das wechselnde elektrische Signal umwandelt,
Gleichricht-und-Filter-Schaltungen (211, 212), die so ausgeführt sind, dass sie das von der zweiten Spulen-Kopplungsschaltung (220) ausgegebene wechselnde elektrische Signal in ein elektrisches Gleichstromsignal umwandeln; sowie
eine Gleichstrom-Wandlerschaltung (213), die so ausgeführt ist, dass sie das von den Gleichricht-und-Filter-Schaltungen (211, 212) ausgegebene elektrische GleichstromSignal in einen vorgegebenen Spannungsausgang (Vout) oder einen vorgegebenen Stromausgang umwandelt;
wobei die Gleichricht-Schaltung (211) durch eine einzelne Diode gebildet wird.

2. System für drahtlose Energieübertragung nach Anspruch 1, wobei die Schaltregelungs-Ansteuerschaltung (110a) enthält:
eine Logik-Steuerschaltung (112), die elektrisch mit der Wellen-Erzeugungsschaltung (111) verbunden ist; sowie
einen MOSFET-Schaltkreis (113), der elektrisch mit der Logik-Steuerschaltung (112) verbunden ist.

3. System für drahtlose Energieübertragung nach Anspruch 2, wobei die Logik-Steuerschaltung (112) und der MOSFET-Schaltkreis (113) auf einem Chip integriert sind.

4. System für drahtlose Energieübertragung nach Anspruch 3, wobei die erste Spulen-Kopplungsschaltung (120) enthält:
eine erste Kompensationsschaltung (121), die elektrisch mit der Schaltregelungs-Ansteuerschaltung (110a) verbunden ist; sowie
eine erste Spule (122), die elektrisch mit der ersten Kompensationsschaltung (121) verbunden ist.

5. System für drahtlose Energieübertragung nach einem der vorangehenden Ansprüche, wobei die zweite Spulen-Kopplungsschaltung (220) enthält:
eine zweite Kompensationsschaltung (221), die elektrisch mit den Gleichricht-Schaltungen (211, 212) verbunden ist; sowie
eine zweite Spule (222), die elektrisch mit der zweiten Kompensationsschaltung (221) verbunden ist.

6. Vorrichtung, die das System für drahtlose Energieübertragung nach einem der vorangehenden Ansprüche umfasst, wobei die Energie-Sendeeinrichtung (100) an einer ersten Komponente der Vorrichtung installiert ist und die Energie-Empfangseinrichtung (200) an einer zweiten Komponente der Vorrichtung installiert ist.

## Revendications

1. Système de transmission de puissance sans fil comprenant :
un émetteur de puissance (100) conçu pour convertir une alimentation d'entrée en courant continu (Vin) en une énergie électromagnétique ; et
un récepteur de puissance (200) couplé électromagnétiquement à l'émetteur de puissance (100) et conçu pour recevoir une sortie d'énergie électromagnétique de l'émetteur de puissance (100),
dans lequel l'émetteur de puissance (100) comprend :
un circuit de génération d'ondes (111) conçu pour générer un signal de commande d'onde carrée ayant une fréquence et un rapport cyclique prédéterminés en fonction de la puissance continue d'entrée (Vin),
dans lequel le circuit générateur d'ondes (111) est configuré pour générer un signal PWM ayant une fréquence prédéterminée et un rapport cyclique prédéterminé ;
un circuit d'attaque de commande de commutation (110a) configuré pour convertir l'alimentation en courant continu d'entrée (Vin) en un signal électrique alternatif en fonction du signal de commande à ondes carrées reçu ; et
un premier circuit de couplage de bobines (120) configuré pour convertir le signal électrique alternatif délivré par le circuit de commande de commutation (110a) en énergie électromagnétique et délivrer l'énergie électromagnétique ;
et dans lequel le récepteur de puissance (200) comprend :
un second circuit de couplage de bobine (220) couplé électromagnétiquement avec le premier circuit de couplage de bobine (120) et conçu pour recevoir l'énergie électromagnétique délivrée par le premier circuit de couplage de bobine (120) et convertir l'énergie électromagnétique reçue en signal électrique alternatif,
des circuits de redressement et de filtrage (211, 212) configurés pour convertir le signal électrique alternatif délivré par le second circuit de couplage de bobines (220) en un signal électrique continu ; et
un circuit de conversion DC-DC (213) configuré pour convertir le signal électrique DC sortant des circuits de redressement et de filtrage (211, 212) en une sortie de tension prédéterminée (Vout) ou une sortie de courant prédéterminée ;
dans lequel ledit circuit redresseur (211) est constitué d'une seule diode.

2. Système de transmission de puissance sans fil selon la revendication 1, dans lequel le circuit de commande de commutation (110a) comprend :
un circuit de commande logique (112) connecté électriquement avec le circuit générateur d'ondes (111); et
un circuit de commutation MOSFET (113) connecté électriquement avec le circuit de commande logique (112).

3. Système de transmission de puissance sans fil selon la revendication 2, dans lequel le circuit de commande logique (112) et le circuit de commutation MOSFET (113) sont intégrés sur une puce.

4. Système de transmission de puissance sans fil selon la revendication 3, dans lequel le premier circuit de couplage de bobines (120) comprend :
un premier circuit de compensation (121) connecté électriquement au circuit de commande de commutation (110a) ; et
une première bobine (122) reliée électriquement au premier circuit de compensation (121).

5. Système de transmission de puissance sans fil selon l'une des revendications précédentes, dans lequel
le second circuit de couplage de bobine (220) comprend :
un second circuit de compensation (221) connecté électriquement aux circuits redresseurs (211, 212) ; et
une seconde bobine (222) reliée électriquement au second circuit de compensation (221).

6. Appareil comprenant le système de transmission de puissance sans fil selon l'une des revendications précédentes, dans lequel l'émetteur de puissance (100) est installé sur une première composante de l'appareil, et le récepteur de puissance (200) est installé sur un second composant de l'appareil.
